**Europäisches Patentamt**

**European Patent Office**

**Office européen des brevets**

(11) Veröffentlichungsnummer : **0 391 398 B1**

(12) **EUROPÄISCHE PATENTSCHRIFT**

(45) Veröffentlichungstag der Patentschrift :
**08.09.93 Patentblatt 93/36**

(21) Anmeldenummer : **90106490.7**

(22) Anmeldetag : **05.04.90**

(51) Int. Cl.$^5$ : **C08F 214/06**, C08F 216/04,
// (C08F214/06, 216:04,
214:06)

(54) Copolymere des Vinylchlorids mit verbesserter thermischer Stabilität und guter Wärmestandfestigkeit.

(30) Priorität : **06.04.89 DE 3911181**

(43) Veröffentlichungstag der Anmeldung :
**10.10.90 Patentblatt 90/41**

(45) Bekanntmachung des Hinweises auf die Patenterteilung :
**08.09.93 Patentblatt 93/36**

(84) Benannte Vertragsstaaten :
**DE FR GB**

(56) Entgegenhaltungen :
**FR-A- 2 116 811**

(56) Entgegenhaltungen :
**FR-A- 2 262 675**
**FR-A- 2 324 655**
**CHEMICAL ABSTRACTS, vol. 91, no. 14, 01 Oktober 1979 Columbus, Ohio, USA ref. no. 109129D**

(73) Patentinhaber : **WACKER-CHEMIE GMBH**
**Hanns-Seidel-Platz 4**
**D-81737 München (DE)**

(72) Erfinder : **Bronberger, Franz, Dr.**
**Mühlbachstrasse 6**
**D-8261 Emmerting (DE)**
Erfinder : **Ober, Ludwig, Dipl.-Ing.**
**Regerstrasse 43**
**D-8263 Burghausen (DE)**

## Beschreibung

Die Erfindung betrifft ein Verfahren zur Herstellung von Vinylchlorid-Vinylester-Copolymeren mit verbesserter thermischer Stabilität und guter Wärmestandfestigkeit.

PVC genießt aufgrund seiner hervorragenden Eigenschaften, wie hoher Festigkeit, Witterungsbeständigkeit oder Chemikalienresistenz, weite Verbreitung in den verschiedensten Anwendungsgebieten. Für einige Bereiche ist jedoch eine verbesserte Verarbeitbarkeit wünschenswert.

Durch Copolymerisation mit anderen Monomeren können Polymere hergestellt werden, die unter Beibehaltung der vorteilhaften PVC-Eigenschaften eine verbesserte Verarbeitbarkeit aufweisen. Obwohl prinzipiell eine große Zahl ethylenisch ungesättigter Verbindungen als Comonomere in Frage kommen (z. B. Acrylsäureester, Methacrylsäureester, Maleinsäureester, Olefine, Acrylnitril u.s.w.), spielen in der Praxis die Copolymeren von Vinylchlorid mit Vinylacetat bei weitem die größte Rolle.

In Abhängigkeit vom Vinylacetat-Anteil und Polymerisationsverfahren können Vinylchlorid/Vinylacetat-Copolymerisate aufgrund der hervorragenden Verarbeitungseigenschaften besonders vorteilhaft zum Beispiel zur Herstellung von Folien oder Schallplatten eingesetzt werden; oder in Verbindung mit Weichmacher zur Bereitung von Pasten mit niederer Geliertemperatur, die etwa zu Fußbodenbelägen oder zu Unterbodenschutzüberzügen für Kraftfahrzeuge verarbeitet werden können, eingesetzt werden.

Ein gravierender Nachteil der genannten Vinylchlorid-Vinylacetat-Copolymeren stellt jedoch deren, gegenüber dem VC-Homopolymerisat, reduzierte thermische Stabilität dar. Dies äußert sich in einer kürzeren Stabilitätszeit nach DIN 53381 ("pH-Stabilitat") oder auch in der Verfärbungsneigung bei der thermoplastischen Verarbeitung. Dies hat zur Folge, daß man mit steigendem Vinylacetat-Anteil im Copolymeren bei der Verarbeitung zunehmende Mengen an Stabilisatoren zusetzen muß, um eine dem VC-Homopolymeren entsprechende Thermostabilität einzustellen. Eine weitere nachteilige Eigenschaft der Vinylchlorid-Vinylacetat-Copolymeren ist deren verminderte Wärmestandfestigkeit, die sich in der erniedrigten Glasübergangstemperatur bzw. Vicat-Temperatur niederschlägt.

Der Erfindung lag daher die Aufgabe zugrunde, Vinylchlorid-Vinylester-Copolymere zur Verfügung zu stellen, welche unter Beibehalt der guten mechanischen und verarbeitungstechnischen Eigenschaften von Vinylchlorid-Vinylacetat-Copolymeren, eine verbesserte thermische Stabilität und gute Wärmestandfestigkeit aufweisen.

Überraschender Weise ist dies dadurch gelungen, daß als Vinylester-Comonomer die Vinylester von verzweigtkettigen Carbonsäuren, die in $\alpha$-Stellung zur Carboxylgruppe ein quartäres C-Atom aufweisen, copolymerisiert wurden. Bisher war lediglich bekannt, daß durch die Substitution von unverzweigten Vinylestern in Vinylester-Copolymeren durch Vinylester von $\alpha$-verzweigten Carbonsäuren die Verseifungsstabilität der Vinylester-Copolymere verbessert wird (DE-B 1092202).

Die FR-A 2116811 betrifft hydroxylierte Vinylpolymere, welche zusammengesetzt sind aus Vinylchlorid, Monoester eines Diols mit (Meth)acrylsäure und Vinylester von $\alpha$-verzweigten Carbonsäuren. Ein funktioneller Zusammenhang zwischen Wärmestabilität bzw. Wärmestandfestigkeit und dem Gehalt an $\alpha$-verzweigten Carbonsäuren wird nicht beschrieben.

Die FR-A 2324655 beschreibt Polymerdispersionen auf der Basis von verseifungsstabilen Ethylen-Vinylacetat-Copolymeren. Die Problematik der Wärmestabilität bzw. Wärmestandfestigkeit wird darin nicht behandelt. Vinylester von unverzweigten und verzweigten Carbonsäuren werden als äquivalent beschrieben.

In der FR-A 2262675 werden carboxylgruppenhaltige Terpolymere aus Vinylchlorid, Vinylester und ethylenisch ungesättigter Mono- und/oder Dicarbonsäuren beschrieben, wobei auf deren Wärmestabilität und Wärmestandfestigkeit nicht eingegangen wird sowie Vinylester von unverzweigten bzw. verzweigten Carbonsäuren als gleichwirkend beschreiben werden.

Im C.A.-Abstract 91:109129 werden Copolymerisate von Vinylchlorid, Vinylacetat, Vinylester von verzweigten Carbonsäuren und Maleinsäure(anhydrid) beschreiben, wobei auf die Problematik der Wärmestabilität bzw. Wärmestandfestigkeit nicht eingegangen wird.

Gegenstand der Erfindung ist ein Verfahren zur Herstellung von Vinylchlorid-Vinylester-Copolymeren mit erhöhter thermischer Stabilität und guter Wärmestandfestigkeit, bestehend aus

a) 50 - 95 Gew.% Vinylchlorid

b) 5 - 50 Gew.% Vinylester,

nach dem Suspensions- oder Emulsionspolymerisationsverfahren, dadurch gekennzeichnet, daß als Comonomere b) Vinylester von gesättigten aliphatischen Monocarbonsäuren mit 8 bis 11 C-Atomen, die in $\alpha$-Stellung zur Carboxylgruppe ein quartäres C-Atom aufweisen copolymerisiert werden.

Vorzugsweise werden als Vinylester von gesättigten, verzweigten aliphatischen Monocarbonsäuren mit 8 bis 11 C-Atomen solche eingesetzt, die in $\alpha$-Stellung zur Carboxylgruppe bis-Alkylsubstituiert sind. Besonders bevorzugt werden die Vinylester von gesättigten $\alpha$-verzweigten Monocarbonsäuren mit 9 oder 10 C-Atomen.

Insbesonders die Vinylversaticsäureester VeoVa 9 bzw. VeoVa 10 (Handelsprodukte der Firma Shell Chemie GmbH). Veova 9 ist ein Gemisch von Vinylestern hochverzweigter Monocarbonsäuren mit 9 C-Atomen. VeoVa 10 besteht aus Vinylestern hochverzweigter Monocarbonsäuren mit 10 C-Atomen.

Die erfindungsgemäß zu verwendenden α-verzweigten Vinylester sind zum Beispiel durch die Säuresynthesen nach Koch und Reppe aus den entsprechenden Olefinen durch Anlagerung von Kohlenmonoxid und Wasser in bekannter Weise zugänglich.

Die einzusetzende Menge an Comonomer b) richtet sich nach dem gewünschten Eigenschaftsbild des Copolymeren. Höhere Anteile an α-verzweigtem Vinylester-Comonomer erleichtern die Verarbeitung. Mit weniger als 5 Gew.% ist die Verbesserung der Verarbeitungseigenschaften gegenüber Homo-PVC zu gering, während bei mehr als 50 % Gewichtsanteil die positiven Eigenschaften von VC-Polymerisaten nicht mehr voll zum Tragen kommen. Als Orientierung kann der Vinylacetatgehalt entsprechender Vinylchlorid/Vinylacetat-Copolymere dienen.

Vorzugsweise enthalten die erfindungsgemäßen Vinylchlorid-Vinylester-Copolymere a) 75-95 Gew.% Vinylchlorid und b) 5-25 Gew.% Vinylester von gesättigten aliphatischen Monocarbonsäuren mit 8 bis 11 C-Atomen, die in α-Stellung ein quartäres C-Atom aufweisen.

Das Molekulargewicht der erfindungsgemäßen Harze bewegt sich im für VC-Copolymerisate üblichen Bereich; vorzugsweise beträgt der K-Wert 30 bis 90.

Zur Herstellung der erfindungsgemäßen Vinylchlorid-Vinylester-Copolymere dienen die für die Herstellung von VC-Homopolymerisaten bzw. VC-Copolymerisaten üblichen Verfahren.

Vorzugsweise erfolgt die Herstellung in Suspension- oder Emulsionspolymerisation.

Im allgemeinen wird die Polymerisation bei Temperaturen zwischen 0 und 80°C durchgeführt. Zur Initiierung werden üblicherweise Radikale lieferne Initiatoren, wie Peroxide oder Azoverbindungen verwendet. Gegebenfalls können auch Redoxsysteme eingesetzt werden.

Zur Stabilisierung des Polymerisationsansatzes können je nach dem gewählten Verfahren Emulgatoren und/oder Schutzkolloide eingesetzt werden. Als Emulgatoren können sowohl ionische, wie etwa Alkylsulfate, Alkylsulfonate oder Sulfosuccinate, als auch nichtionische Emulgatoren, wie Teilfettsäureester mehrwertiger Alkohole, Teilfettalkoholether mehrwertiger Alkohole oder Polyoxyethylenether von Fettalkoholen eingesetzt werden. Geeignete Schutzkolloide sind zum Beispiel Celluloseether, Polyvinylalkohol in verschiedenen Verseifungsgraden, Polyvinylpyrrolidon und/oder Styrolmaleinsäureanhydridcopolymere.

Die Polymerisation kann diskontinuierlich, aber gegebenenfalls auch kontinuierlich mit oder ohne Verwendung von Saatlatices, unter Vorlage aller oder einzelner Bestandteile des Reaktionsgemisches oder unter teilweiser Vorlage und Nachdosierung der oder einzelner Bestandteile des Reaktionsgemisches oder nach dem Dosierverfahren ohne Vorlage durchgeführt werden.

Zur Erzielung eines hohen Umsatzes und damit eines niederen Restgehaltes an Vinylester ist es vorteilhaft bis zu einem möglichst niedrigen Enddruck, vorzugsweise unter 2 bar abs., zu polymerisieren. Dem selben Ziel ist es auch dienlich, einen Teil des Vinylchlorids erst nach einem gewissen Druckabfall, etwa 2 bis 4 bar, nachzudosieren.

Der Polymerisationsansatz kann in üblicher Art und Weise aufgearbeitet werden. Zum Beispiel können die entstehenden Suspensionen oder Latices in üblicher Weise entgast werden und anschließend durch Filtration, Koagulation, Walzen- oder Sprühtrocknen aufgearbeitet werden.

Das erfindungsgemäße Vinylchlorid-Vinylester-Copolymerisat kann mit den üblichen Rezepturen für die Hart-, Weich- und die Plastisolverarbeitung, unter Verwendung der üblichen Zusätze, wie Weichmacher, z.B. auf Basis von Dicarbonsäure- und Phosphorsäureester, Licht- und Wärmestabilisatoren, z. B. auf Zn-, Cd-, Ba-, Pb- und Sn-Basis, Verarbeitungshilfen, wie Gleitmittel (z.B. auf Acrylatbasis) oder Pigmente und/oder Füllstoffe, verarbeitet werden.

Besonders vorteilhaft bei der Verarbeitung der erfindungsgemäßen Vinylchlorid-Vinylester-Copolymerisate ist die Tatsache, daß aufgrund der hohen Thermostabilität nur mehr etwa die Hälfte der bisher, bei der Verarbeitung der entsprechenden Vinylchlorid-Vinylacetat-Copolymere, benötigten Menge an Wärmestabilisator zugesetzt werden muß. Die Copolymeren zeigen weiterhin gute Wärmestandfestigkeit, mit Vicat A-Werten über 60°C, insbesondere über 70°C. Darüberhinaus führt die Verwendung der erfindungsgemäßen Copolymerisate in der Hartverarbeitung zu Produkten höherer Transparenz. Letzteres dürfte auf die bessere Verträglichkeit der Copolymerisate mit dem zur Verarbeitung eingesetzten Gleitmittel zurückzuführen sein.

Die folgenden Beispiele dienen zur weiteren Erläuterung der Erfindung:

Beispiel 1:

In einem 3 l Laborautoklaven mit Doppelmantel und Impellerrührer wurden 1600 g demineralisiertes Wasser, 3.0 g Dicetylperoxidicarbonat und 3.0 g Dilauroylperoxid (LPO) vorgelegt. Der verschlossene Reaktor wurde evakuiert, mit Stickstoff gespült und abermals evakuiert. Nach Zugabe von 70 g VeoVa 9 und Aufdrücken von 730 g Vinylchlorid wurde der Kesselinhalt 10 min bei 600 UpM durchmischt. Als Schutzkolloid wurden 110 g einer 3.1 Mol-%-igen wässrigen Lösung einer Methylhydroxypropylcellulose (Viskosität 2 % in Wasser 100 mPas) zugegeben. Anschließend wurde die Reaktionsmischung über den Doppelmantel auf 60°C aufgeheizt und bei dieser Temperatur und 600 UpM bis zu einem Enddruck von 1 bis 2 bar abs. auspolymerisiert (ca. 4 h). Das Polymer wurde abgesaugt und bei 60°C getrocknet.

Zur Testung wurde eine Pulvermischung aus 100 Teilen des Copolymers mit 1.5 Teilen eines Organozinn-Stabilisators (Irgastab 17 MOK der Fa. Ciba Geigy) und 0.5 Teilen eines Gleitmittels (Montansäureester, Wachs E Hoechst AG) auf dem Mischwalzwerk bei 160°C für 5 min gewalzt und das so erhaltene Walzfell anschließend 5 min bei 160°C zu einer Platte gepreßt, aus der die Probekörper für die thermische und mechanische Testung gewonnen wurden.

Die Testergebnisse sind in Tabelle 1 zusammengefaßt.

Zur Bestimmung der pH-Stabilität wurde nach DIN 53381 (Teil 1) vorgegangen.

Die Bestimmung der Vicat-Erweichungstemperatur erfolgte nach DIN 53460.

Die Reißfestigkeit und Reißdehnung wurden nach DIN 53455 bestimmt.

Zur Bestimmung der Walzstabilität wurde ein Teil des oben genannten Walzfelles auf einem Walzwerk bei der angegebenen Temperatur gewalzt, wobei alle 5 Minuten Proben gezogen wurden. Die Zeitspanne bis zum Auftreten einer sichtbaren Braunfärbung ist die Walzstabilität.

Zur Bestimmung der Ofenstabilität wird ein Teil des oben genannten Walzfelles durch einen Ofen mit der angegebenen Temperatur gezogen. Die Verweilzeit bis zur sichtbaren Braunfärbung ist die Ofenstabilität

**Beispiel 2:**

Es wurde analog Beispiel 1 vorgegangen. Statt VeoVa 9 wurde die entsprechende Menge VeoVa 10 als Vinylester-Monomer eingesetzt.

**Vergleichsbeispiel 1:**

Durchführung analog Beispiel 1. Als Vinylester wurde Vinylacetat eingesetzt.

**Beispiel 3:**

In einem 400 l Autoklaven wurden 200 kg Wasser, 50 g Kreide, 70 g Bis(tert.-butylcyclohexyl)peroxidicarbonat (BCHPC) und 70 g LPO vorgelegt und nach Evakuieren, Druckausgleich mit Stickstoff und nochmaligem Evakuieren 9 kg VeoVa 9 zugegeben und dann 91 kg Vinylchlorid aufgedrückt. Nach 30 min Durchmischungszeit wurden 7.6 kg einer 5.3 %-igen Lösung eines Polyvinylalkohols (Viskosität 5 mPas in 4 %-iger Lsg.; Verseifungszahl 290) zugegeben und die Mischung bei 58°C bis zu einem Enddruck von 2 bar abs. auspolymerisiert.

Zur Bereitung der Prüfkörper wurden 100 Teile des getrockneten Polymers mit 1.5 Teilen Organozinn-Stabilisator (Irgastab 17 MOK der Firma Ciba Geigy) und 1 Teil Gleitmittel (Montansäureester, Wachs E Hoechst AG) rezeptiert und analog Beispiel 1 zu Prüfkörpern verarbeitet.

Die Testung der pH-Stabilität, der Vicat-Erweichungstemperatur und der Ofenstabilität erfolgte analog Beispiel 1.

**Beispiel 4:**

Es wurde wie in Beispiel 3 vorgegangen, mit folgenden Änderungen: 90 kg statt 91 kg Vinylchlorid, 10 kg VeoVa 10 statt 9 kg VeoVa 9 und 110 g BCHPC statt 70 g BCHPC und 70 g LPO.

Tabelle 2 zeigt die Vorteile der Copolymere nach Beispiel 3 und Beispiel 4 gegenüber einem handelsüblichen Vinylchlorid/Vinylacetat-Copolymer gleicher Zusammensetzung (Vinnol[R] H 10/60 der Wacker-Chemie GmbH).

**Beispiel 5:**

In einem 1 l Druckreaktor wurden 0.5 l Wasser, 12 g einer 20 %-igen Lösung von Natrium-bis-(2-ethylhexyl)sulfosuccinat, 0.4 g Kaliumpersulfat, 190 g Vinylchlorid und 60 g VeoVa 10 bei 70°C zur Reaktion gebracht. Nach 2.5 Stunden wurde bei einem Enddruck von 2.0 bar abs. belüftet. Aus der resultierenden Dispersion isolierte man das Polymer durch Koagulation mit 5 %-iger $CaCl_2$-Lösung und Absaugen.

Die Messung der pH-Stabilität (nach DIN 53381, Teil 1) ergab einen Wert von 33 Minuten.

Vergleichsbeispiel 2:

Es wurde analog Beispiel 5 vorgegangen. Als Vinylestermonomer wurde Vinylacetat eingesetzt.

Bei Ersatz von VeoVa 10 durch Vinylacetat nimmt die pH-Stabilität (nach DIN 53381, Teil 1) von 33 auf 11 Minuten ab.

EP 0 391 398 B1

TABELLE 1:

| Bei-spiel | Comonomer | Rohpulver | | | | Formkörper | | | |
|---|---|---|---|---|---|---|---|---|---|
| | | Anteil (%) | K-Wert | pH-Stabilität (min) | Vicat A/B (°C) | Reißfestigkeit (N/mm$^2$) | Reißdehnung (%) | Walzstabilität (min) 160°C | Ofen-stabilität (min) 180°C |
| Bsp.1 | Veova 9 | 9.6 | 57.9 | 26 | 77/74 | 33 | 18 | 90 | 45 |
| Bsp.2 | VeoVa 10 | 9.7 | 58.6 | 27 | 77/71 | 32 | 16 | >100 | 50 |
| Vgl.-bsp.1 | VAc | 8.8 | 58.6 | 19 | 76/71 | 30 | 16 | 50 | 20 |

TABELLE 2:

| Beispiel | Rohpulver | | | | Formkörper | |
| --- | --- | --- | --- | --- | --- | --- |
| | Comonomer | Anteil (%) | K-Wert | pH-Stabilität (min) | Vicat A/B (°C) | Ofenstabilität (min) 190°C |
| H 10/60* | VAc | 9.5 | 60.0 | 30 | 76/72 | 15 |
| Bsp. 3 | VeoVa 9 | 9.8 | 61.4 | 43 | 76/74 | 35 |
| Bsp. 4 | VeoVa 10 | 11.5 | 61.6 | 44 | 74/67 | 30 |

* Handelsprodukt der Wacker-Chemie GmbH

EP 0 391 398 B1

EP 0 391 398 B1

## Patentansprüche

1. Verfahren zur Herstellung von Vinylchlorid-Vinylester-Copolymeren mit erhöhter thermischer Stabilität und guter Wärmestandfestigkeit, bestehend aus
   a) 50 - 95 Gew.% Vinylchlorid und
   b) 5 - 50 Gew.% Vinylester,
   nach dem Suspensions- oder Emulsionspolymerisationsverfahren dadurch gekennzeichnet, daß als Comonomere b) Vinylester von gesättigten aliphatischen Monocarbonsäuren mit 8 bis 11 C-Atomen, die in α-Stellung zur Carboxylgruppe ein Quartäres C-Atom aufweisen, copolymerisiert werden.

2. Verfahren nach Anspruch 1, dadurch gekennzeichnet, daß
   a) 75 - 95 Gew.% Vinylchlorid und
   b) 5 - 25 Gew.% Vinylester copolymerisiert werden.

3. Verfahren nach Anspruch 1 oder 2 , dadurch gekennzeichnet, daß als Vinylester von gesättigten, verzweigten aliphatischen Monocarbonsäuren mit 8 bis 11 C-Atomen solche eingesetzt werden, die in α-Stellung zur Carboxylgruppe bis-Alkylsubstituiert sind.

4. Verfahren nach Anspruch 1, 2 oder 3, dadurch gekennzeichnet, daß als Comonomer b) Vinylester von gesättigten α-verzweigten Monocarbonsäuren mit 9 C-Atomen copolymerisiert werden.

5. Verfahren nach Anspruch 1, 2, 3 oder 4, dadurch gekennzeichnet, daß als Comonomer b) Vinylester von gesättigten α-verzweigten Monocarbonsäuren mit 10 C-Atomen copolymerisiert werden.

6. Verfahren nach Anspruch 1, 2, 3, 4 oder 5, dadurch gekennzeichnet, daß bis zu einem Enddruck von unter 2 bar abs. polymerisiert wird.

## Claims

1. Process for preparing vinyl chloride-vinyl ester copolymers having improved thermal stability and good heat resistance, comprising
   a) 50 - 95% by weight of vinyl chloride and
   b) 5 - 50% by weight of vinyl ester
   according to the suspension or emulsion polymerisation process, characterised in that, as comonomer b), vinyl esters of saturated aliphatic monocarboxylic acids having 8 to 11 carbon atoms and containing a quaternary carbon atom in the α-position to the carboxyl group are copolymerised.

2. Process according to Claim 1, characterised in that
   a) 75 - 95% by weight of vinyl chloride and
   b) 5 - 25% by weight of vinyl ester are copolymerised.

3. Process according to Claim 1 or 2, characterised in that the vinyl esters of saturated, branched aliphatic monocarboxylic acids having 8 to 11 carbon atoms are esters that are bis-alkyl-substituted in the α-position to the carboxyl group.

4. Process according to Claim 1, 2 or 3, characterised in that, as comonomer b), vinyl esters of saturated α-branched monocarboxylic acids having 9 carbon atoms are copolymerised.

5. Process according to Claim 1, 2, 3 or 4, characterised in that, as comonomer b), vinyl esters of saturated α-branched monocarboxylic acids having 10 carbon atoms are copolymerised.

6. Process according to Claim 1, 2, 3, 4 or 5, characterised in that the polymerisation is carried out to a final pressure of below 2 bar absolute.

## Revendications

1. Procédé de préparation de copolymères de chlorure de vinyle et d'esters vinyliques ayant une stabilité

8

thermique accrue et une bonne résistance à la chaleur, formés de

    a) 50 - 95% en poids de chlorure de vinyle et

    b) 5 - 50% en poids d'esters vinyliques,

suivant la méthode de polymérisation en suspension ou en émulsion, procédé caractérisé en ce que l'on copolymérise comme comonomères b) des esters vinyliques d'acides monocarboxyliques aliphatiques saturés ayant de 8 à 11 atomes de carbone et un atome de carbone quaternaire à la position $\alpha$ par rapport à leur groupe carboxylique.

2.   Procédé selon la revendication 1, caractérisé en ce que l'on copolymérise

    a) 75 - 95% en poids de chlorure de vinyle avec

    b) 5 - 25% en poids d'esters vinyliques,

3.   Procédé selon la revendication 1 ou 2, caractérisé en ce que les esters vinyliques des acides monocarboxyliques saturés ramifiés, aliphatiques ayant de 8 à 11 atomes de carbone sont des esters d'acides qui comportent deux sustituants alkyliques en position $\alpha$ par rapport au groupe carboxylique.

4.   Procédé selon la revendication 1, 2 ou 3, caractérisé en ce que l'on copolymérise comme comonomères b) des esters vinyliques d'acides monocarboxyliques ayant 9 atomes de carbone, saturés et $\alpha$- ramifiés.

5.   Procédé selon une des revendications 1, 2, 3 et 4, caractérisé en ce que l'on copolymérise comme comonomères b) des esters vinyliques d'acides monocarboxyliques ayant 10 atomes de carbone, saturés et $\alpha$- ramifiés.

6.   Procédé selon une des revendications précédentes, caractérisé en ce que l'on poursuit la polymérisation jusqu'à une pression finale absolue inférieure à 2 bar.